# EUROPEAN PATENT APPLICATION

(11) **EP 2 451 175 A1**
(43) Date of publication of application: **09.05.2012**
(21) Application number: 11183206.9
(22) Date of filing: 28.09.2011
(51) Int. Cl.: H04N 13/00

(54) **Display apparatus and method for providing graphic image**

(30) Priority: 03.11.2010 KR 20100108709
(71) Applicant: Samsung Electronics Co., Ltd., Suwon-si, Gyeonggi-do 442-742 (KR)
(72) Inventor: Kim, Jin, Gyeonggi-do (KR)
(74) Representative: Fearnside, Andrew Simon

(57) **Abstract**

A display apparatus and a method for providing a graphic image thereof are provided. The display apparatus buffers a plurality of graphic images line by line alternately, in the form of interlace, and updates a graphic image to be mixed with a buffered graphic image. Accordingly, the display apparatus may update a plurality of graphic images through one acceleration operation.

## Description

### CROSS-REFERENCE TO RELATED APPLICATION

This application claims priority from Korean Patent Application No. 10-2010-0108709, filed in the Korean Intellectual Property Office on November 3, 2010, the disclosure of which is incorporated herein by reference.

### BACKGROUND

### 1. Field

Apparatuses and method consistent with exemplary embodiments relate to a display apparatus and a method for providing a graphic image thereof, and more particularly, to a display apparatus which provides a graphic image preferably by inserting the graphic image to a video image and a method for providing a graphic image thereof.

### 2. Description of the Related Art

A display apparatus may display an input video image as well as a graphic image. For example, a display apparatus may display a graphic image to provide a graphic user interface for a user.

Generally, a graphic image is inserted to an input video image and displayed. Specifically, a graphic image is generated separately from an input video image, overlapped with the video image and then displayed on the screen. That is, a graphic image is generally displayed in the form of On Screen Display (OSD).

A three-dimensional (3D) image consists of a left eye image perceived by a left eye and a right eye image perceived by a right eye, and a 3D display apparatus represents a stereoscopic sense using time difference between the left eye image and the right eye image. As such, an environment where a left eye image and a right eye image are alternately displayed to create a 3D image is referred to as a stereo 3D image environment.

In order to insert a graphic image to a 3D image, a left eye graphic and a right eye graphic are required. However, if a left eye graphic image and a right eye graphic image are inserted through two acceleration operations, time delay may occur. In addition, the left graphic image or the right graphic image may be lost.

Therefore, a method for inserting a graphic image into a 3D image without error is required.

### SUMMARY

According to the present invention there is provided an apparatus and method as set forth in the appended claims. Other features of the invention will be apparent from the dependent claims, and the description which follows.

Exemplary embodiments provide a display apparatus which performs buffering on each line of a plurality of graphic images in an interlace form alternately and updates a graphic image to be mixed with the buffered graphic image and a method for providing a graphic image thereof.

According to an aspect of an exemplary embodiment, there is provided a display apparatus including a video processing unit which processes an input video image, a graphic image processing unit which generates and updates a plurality of graphic images to be added to the video image, a mixer which mixes the video image with the graphic image, and an image output unit which outputs the mixed image, and the graphic image processing unit includes a graphic buffer which alternately buffers the plurality of graphic images line by line, in a form of interlace.

The graphic image processing unit may include an accelerator which outputs a graphic image buffered in the graphic buffer to update a graphic image to be mixed with the buffered graphic image.

The accelerator may update a plurality of graphic images corresponding to one video image frame through one acceleration operation.

The plurality of graphic images may be alternately buffered line by line, in a form of interlace so as to be buffered in one area.

The video image may be a 3D video image of which one video image frame consists of a left eye image frame and a right eye image frame.

The plurality of graphic images may consist of a left eye graphic image to be inserted to the left eye video image frame and a right eye graphic image to be inserted to the right eye video image frame, and the graphic image processing unit may alternately buffer the left eye graphic image and the right eye graphic image line by line, in a form of interlace, and update the graphic image to be mixed with a buffered graphic image.

The plurality of graphic images may be OSD graphic images having a plurality of layers and include graphic images as many as the plurality of layers in one video image frame, and the graphic image processing unit may alternately buffer graphic images regarding the plurality of layers line by line, in a form of interlace, and update the graphic image to be mixed with a buffered graphic image.

According to an aspect of another exemplary embodiment, there is provided a method for providing a graphic image, the method including processing an input video image, generating and updating a plurality of graphic images to be added to the video image, mixing the video image with the graphic image, and displaying the mixed image, and the generating and updating graphic images may include alternately buffering the plurality of graphic images line by line, in a form of interlace, updating a graphic image to be mixed with a buffered graphic image, and outputting the mixed image.

The generating and updating the plurality of graphic images may include accelerating by outputting a graphic image buffered in the graphic buffer to update a graphic image to be mixed with the buffered graphic image.

The accelerating may include updating a plurality of graphic images corresponding to one video image frame through one acceleration operation.

The plurality of graphic images may be alternately buffered line by line, in a form of interlace so as to be buffered in one area.

The video image may be a 3D video image of which one video image frame consists of a left eye image frame and a right eye image frame.

The plurality of graphic images may consist of a left eye graphic image to be inserted to the left eye video image frame and a right eye graphic image to be inserted to the right eye video image frame, and the generating and updating graphic images may include alternately buffering the left eye graphic image and the right eye graphic image line by line, in a form of interlace, and updating the graphic image to be mixed with a buffered graphic image.

The plurality of graphic images may be OSD graphic images having a plurality of layers and include graphic images as many as the plurality of layers in one video image frame, and the generating and updating graphic images may include alternately buffering graphic images regarding the plurality of layers line by line, in a form of interlace, and updating the graphic image to be mixed with a buffered graphic image.

### BRIEF DESCRIPTION OF THE DRAWINGS

The above and/or other aspects will be more apparent by describing exemplary embodiments with reference to the accompanying drawings, in which:
FIG. 1 is a block diagram illustrating configuration of a television according to an exemplary embodiment;
FIG. 2 is a block diagram illustrating configuration of a graphic image processing unit according to an exemplary embodiment;
FIG. 3 is a block diagram illustrating configuration of a mixing unit according to an exemplary embodiment;
FIG. 4 is a flowchart to explain a method for providing a graphic image according to an exemplary embodiment;
FIG. 5A is a view illustrating a process where a graphic image for a 3D image is buffered in an interlace form and updated according to an exemplary embodiment;
FIG. 5B is a view illustrating a process where a graphic image for a 3D image is buffered and updated according to the prior art method;
FIG. 6 is a view illustrating a process where a video image for a 3D image is mixed with a graphic image according to an exemplary embodiment;
FIG. 7 is a view illustrating a process where a multi-layered graphic image for a 2D image is buffered in an interlace form and updated according to an exemplary embodiment; and
FIG. 8 is a view illustrating a process where a video image for a 2D image is mixed with a multi-layered graphic image according to an exemplary embodiment.

### DETAILED DESCRIPTION

Certain exemplary embodiments are described in more detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

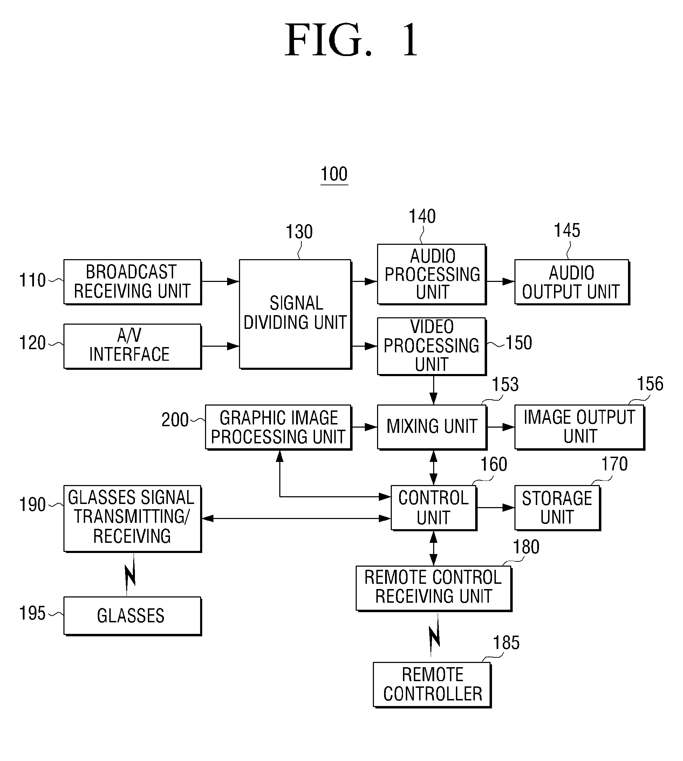

FIG. 1 is a block diagram illustrating a configuration of a 3D TV 100 according to an exemplary embodiment. As illustrated in FIG. 1, the 3D TV 100 comprises a broadcast receiving unit 110, an A/V interface 120, a signal dividing unit 130, an audio processing unit 140, an audio output unit 145, a video processing unit 150, a mixing unit 153, a graphic image processing unit 200, an image output unit 156, a control unit 160, a storage unit 170, a remote control receiving unit 180, and a glasses signal transmitting/receiving unit 190.

The broadcast receiving unit 110 receives broadcast from a broadcast station or a satellite through a cable or wirelessly and demodulates the received broadcast. In addition, the broadcast receiving unit 110 may receive a 2D image signal and a 3D video image signal including 3D image data.

The A/V interface 120 is connected to an external apparatus and receives an image. In particular, the A/V interface 120 may receive 2D image data or 3D image data from an external apparatus. The A/V interface 120, for example, may be an interface using S-Video, component, composite, D-Sub, DVI, HDMI, and the like.

Herein, the 3D image data is data including 3D image information. The 3D image data includes left eye image data and right eye image data in one data frame region. The 3D image data may be classified into, for example, an interleave method, a side-by-side method, and an above-below method, depending on how left eye image data and right eye image data are included in the frame region.

The signal dividing unit 130 divides an input image signal into an audio signal and a video signal and outputs the audio signal to the audio processing unit 140 and the video signal to the video processing unit 150.

The audio processing unit 140 performs signal processing such as audio decoding on an audio signal input from the signal dividing unit 130. In addition, the audio processing unit 140 outputs the processed audio signal to the audio output unit 145.

The audio output unit 145 outputs the processed audio signal through an internal speaker. In addition, the audio output unit 145 may output the processed audio signal through an external speaker.

The video processing unit 150 performs signal processing such as video decoding and video scaling on a video signal input from the signal dividing unit 130. In addition, the video processing unit 150 outputs the processed video image to the mixing unit 153.

Herein, the video image represents a content image input from outside through the broadcast receiving unit 110 or the A/V interface 120. For example, the video image may be a broadcast image or a DVD image.

In addition, the video image may be a 3D image. In this case, a video image frame of the video image consists of a left eye video frame and a right eye video frame. Accordingly, if an input image is a 3D image, the video processing unit 150 outputs a left eye video image and a right eye video image.

Specifically, if input image data is 3D image data, the video processing unit 150 generates a left eye image and a right eye image which size is interpolated to fit in one screen using the input 3D image data. That is, the video processing unit 150 generates a left eye image and a right eye image to be displayed on the screen to form a 3D stereoscopic image.

To do so, the video processing unit 150 separates the input 3D image data into left eye image data and right eye image data. Since one frame data of the received 3D image data includes the left eye image data and the right eye image data, the separated left eye image data or right eye image data corresponds to a half of the whole screen size, respectively. Accordingly, the video processing unit 150 generates a left eye image and a right eye image to be displayed on the screen having the whole screen size by twice enlarging or interpolating the separated left eye image data and right eye image data.

As such, in the case of a 3D video image, the video processing unit 150 outputs processed left eye video image and right eye video image to the mixing unit 153.

The graphic image processing unit 200 generates and updates a graphic image to be added to a video image. Herein, the graphic image represents an image generated to be displayed on the screen of the 3D TV 100. For example, the graphic image may be a Graphic User interface (GUI) for providing an interface to a user. The graphic image may be added to a video image in the form of OSD.

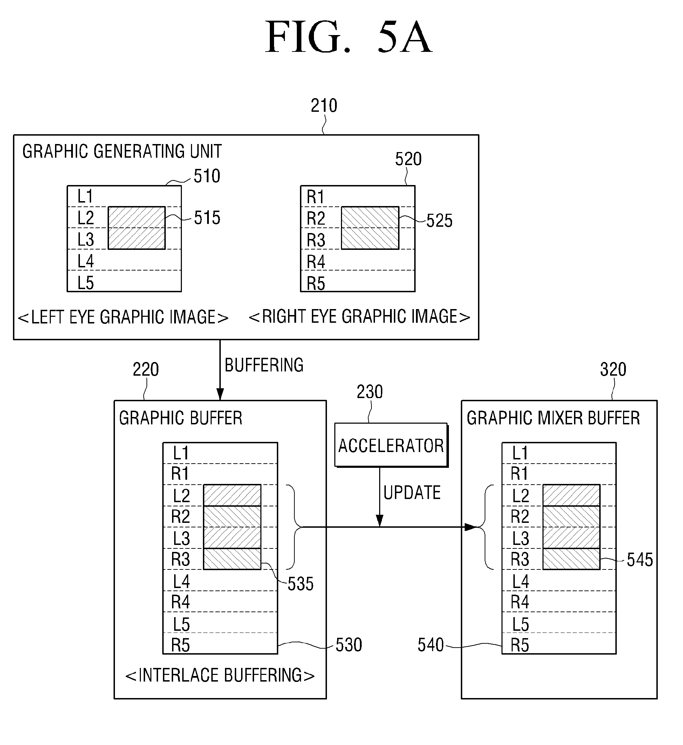

In this case, the graphic image processing unit 200 alternately buffers a plurality of graphic images line by line, in the form of interlace, and updates a graphic image to be mixed with the buffered graphic image. As such, a plurality of graphic images are alternately buffered line by line, in the form of interlace, to be buffered in one area. This will be explained in detail later with reference to FIG. 5A.

Herein, a plurality of graphic images correspond to one video image frame. Specifically, in the case of a 3D image, one video image frame consists of a left eye video image frame and a right eye video image frame, and a plurality of graphic images consist of a left eye graphic image to be inserted to a left eye video image frame and a right eye graphic image to be inserted to a right eye video image frame.

In this case, the graphic image processing unit 200 alternately buffers a left eye graphic image and a right eye graphic image line by line, in the form of interlace, which is illustrated in FIG. 5A. Subsequently, the graphic image processing unit 200 updates a graphic image to be mixed with the buffered graphic image.

Meanwhile, a plurality of graphic images may be an OSD graphic image including a plurality of layers. In this case, a plurality of graphic images include a plurality of layers with respect to one video image frame. The graphic image processing unit 200 buffers graphic images for a plurality of layers line by line alternately, in the form of interlace, and updates a graphic image to be mixed with the buffered graphic image.

As such, the graphic image processing unit 200 buffers a plurality of graphic images line by line alternately, in the form of interlace and thus, the graphic images are included in one buffer area. Accordingly, the graphic image processing unit 200 may update a plurality of graphic images through one acceleration operation.

As described above, the graphic image processing unit 200 generates a graphic image and updates a previous graphic image with a newly generated graphic image. In this case, the graphic image processing unit 200 updates only an area where a graphic image is displayed among the entire screen. Generally, a graphic image is rarely displayed on the entire screen and instead, a graphic image is displayed on only one portion of the screen. Therefore, if the entire screen is updated whenever a graphic image changes, unnecessary processing increases, thereby slowing down the update speed of the graphic image. Accordingly, the graphic image processing unit 200 updates only an area where a graphic image is included from among the entire screen.

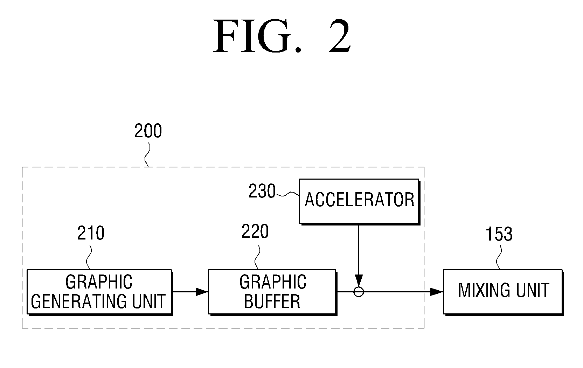

Subsequently, the graphic image processing unit 200 outputs a graphic image which is generated and updated to the mixing unit 153. The detailed configuration of the graphic image processing unit 200 will be explained later with reference to FIG. 2.

The mixing unit 153 mixes a video image output from the video processing unit 150 with a graphic image output from the graphic image processing unit 200. That is, the mixing unit 153 performs the function of inserting a graphic image to a video image.

Specifically, the mixing unit 153 inserts a graphic image to a video image using a graphic image buffered in the form of interlace. To do so, if one video image frame corresponds to N graphic images, the mixing unit 153 sets a horizontal offset value to be N times that of a general graphic image which is not in the form of interlace.

For example, in the case of a 3D image, the mixing unit 153 sets a horizontal offset value to be two times that of a general graphic image which is not in the form of interlace since every other pixel line should be read in order to read out only pixel lines of a left eye graphic image.

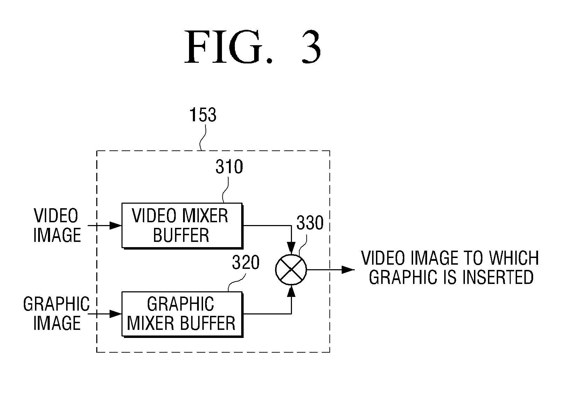

Such configuration of the mixing unit 153 will be explained in detail with reference to FIG. 3.

The image output unit 156 outputs a mixed image. Specifically, the image output unit 156 outputs a video image to which a graphic image is inserted to an internal display apparatus or an external display apparatus. In particular, in the case of a 3D image, the image output unit 156 outputs a left eye image and a right eye image alternately on the screen of the display apparatus.

The storage unit 170 records and stores an image received from the broadcast receiving unit 110 or the interface 120. In addition, the storage unit 170 stores various kinds of content files. The storage unit 170 may also store graphic image data for providing various functions to a user. The storage unit 170 may be embodied as a hard disk, a non-volatile memory, and so forth.

The remote control receiving unit 180 receives a user's command from the remote controller 185 and transmits the received command to the control unit 160.

The glasses signal transmitting/receiving unit 190 transmits a clock signal to open left eye glasses and right eye glasses of the glasses 190 alternately. In addition, the 3D glasses 195 opens left eye glasses and right eye glasses alternately according to the received clock signal.

The control unit 160 identifies a user's command based on a user's input transmitted from the remote controller 185 and controls overall operation of the 3D TV 100 according to the identified user's command.

Specifically, the control unit 160 controls the broadcast receiving unit 110, the A/V interface 120, the signal dividing unit 130, the audio processing unit 140, the audio output unit 145, the video processing unit 150, the mixing unit 153, the graphic image processing unit 200, the image output unit 156, the storage unit 170, the remote control receiving unit 180, and the glasses signal transmitting/receiving unit 190 to perform the above-mentioned functions.

Hereinafter, the configuration of the graphic image processing unit 200 will be explained in detail with reference to FIG. 2. FIG. 2 is a block diagram illustrating the configuration of the graphic image processing unit 200 in detail according to an exemplary embodiment. As illustrated in FIG. 2, the graphic image processing unit 200 comprises a graphic generating unit 210, a graphic buffer 220, and an accelerator 230.

The graphic generating unit 210 generates a plurality of graphic images to be displayed on the screen. In this case, a plurality of graphic images represent the number of graphic images corresponding to a single video image frame. For example, if a video image is a 3D image, a plurality of graphic images consist of a left eye graphic image and a right eye graphic image. If a graphic image is an OSD image having N layers, the number of a plurality of graphic images becomes N.

As such, the graphic generating unit 210 generates a plurality of graphic images and buffers the generated graphic images in the graphic buffer 220.

The graphic buffer 220 buffers a plurality of graphic images line by line, in the form of interlace. For example, in a 3D image, the graphic buffer 220 buffers one pixel line of a left eye graphic image and one pixel line of a right eye graphic image and then, buffers the next pixel line of the left eye graphic image and the next pixel line of the right eye graphic image.

As such, the graphic buffer 220 buffers each of a plurality of graphic images line by line alternately, in the form of interlace.

The accelerator 230 outputs a plurality of graphic images which are buffered in the graphic buffer 220 to the mixing unit 153 to update a graphic image to be mixed with the buffered graphic image. Specifically, the accelerator 230 performs an acceleration operation so that a graphic image buffered in the graphic buffer 220 is output at a time when a graphic image should be updated. Such acceleration operation of the accelerator is controlled by the control unit 160. That is, the control unit 160 controls the accelerator 230 to perform the acceleration operation at a time when a graphic image should be displayed. Subsequently, the graphic buffer 220 outputs a plurality of graphic images to the mixing unit 153 at a corresponding time.

In this case, the plurality of buffered graphic images are buffered in one area since the plurality of buffered graphic images are buffered in the form of interlace. Therefore, the accelerator 230 may output and update a plurality of graphic images through one acceleration operation, which will be explained in detail with reference to FIG. 5A.

As such, the graphic image processing unit 200 buffers a plurality of graphic images in a single area since the plurality of graphic images are buffered in the form of interlace. Accordingly, the graphic image processing unit 200 may output and update a plurality of graphic images through one acceleration operation.

Hereinafter, the configuration of the mixing unit 153 will be explained in detail with reference to Fig. 3. FIG. 3 is a block diagram illustrating the configuration of the mixing unit 153 in detail according to an exemplary embodiment. As illustrated in FIG. 3, the mixing unit 153 comprises a video mixer buffer 310, a graphic mixer buffer 320, and a mixer 330.

The video mixer buffer 310 buffers a video image output from the video processing unit 150.

The graphic mixer buffer 320 buffers a graphic image output from the graphic image processing unit 200. In this case, in the graphic mixer buffer 320, a plurality of graphic images are buffered by each pixel line alternately in the form of interlace. In addition, the graphic mixer buffer 320 updates the previously buffered graphic image with a graphic image output from the graphic image processing unit 200. In this case, the graphic mixer buffer 320 updates only an area where a graphic image is displayed from among the entire screen.

Since a plurality of graphic images buffered in the graphic mixer buffer 320 are buffered in the form of interlace, the graphic image processing unit 200 may update a plurality of graphic images through one acceleration operation.

The mixer 330 mixes a video image buffered in the video mixer buffer 310 with a graphic image buffered in the graphic mixer buffer 320. That is, the mixer 330 adds a graphic image in a video image.

The mixer 330 inserts a graphic image to a video image using a graphic image buffered in the form of interlace. To do so, if one video image frame corresponds to N graphic images, the mixer 330 sets a horizontal offset value to be N times that of a general graphic image which is not in the form of interlace.

For example, in the case of a 3D image, the mixer 330 sets a horizontal offset value to be two times that of a general graphic image which is not in the form of interlace since every other pixel line should be read out to read out only pixel lines of a left eye graphic image.

As such, the horizontal offset value of the mixer 330 is set under the control of the control unit 160. That is, the control unit 160 sets the horizontal offset value of the mixer 330 to be two times that of a general graphic image which is not in the form of interlace.

The 3D TV 100 having the above-described configuration buffers a plurality of graphic images in the form of interlace in a single area. Accordingly, the 3D TV 100 may output and update a plurality of graphic images through one acceleration operation.

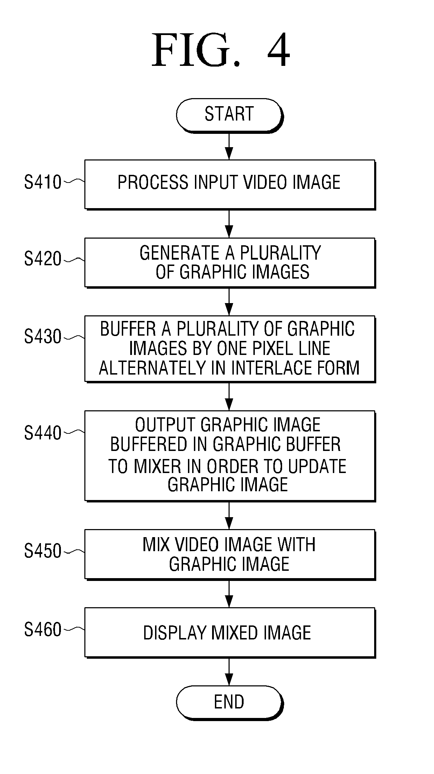

Hereinafter, a method for providing a graphic image will be explained with reference to FIG. 4. FIG. 4 is a flowchart to explain a method for providing a graphic image according to an exemplary embodiment.

First of all, the 3D TV 100 performs signal processing on an input video image (S410).

The 3D TV 100 generates a plurality of graphic images (S420). Subsequently, the 3D TV 100 buffers a plurality of graphic images by each pixel line alternately, in the form of interlace (S430). In order to update a graphic image, the 3D TV 100 outputs a graphic image buffered in the graphic buffer 220 to the mixing unit 153 (S440).

Subsequently, the 3D TV 100 mixes a graphic image with a video image (S450) and displays the mixed image (S460).

Through the above process, the 3D TV 100 buffers a plurality of graphic images in the form of interlace in a single area. Accordingly, the 3D TV 100 may output and update a plurality of graphic images through one acceleration operation.

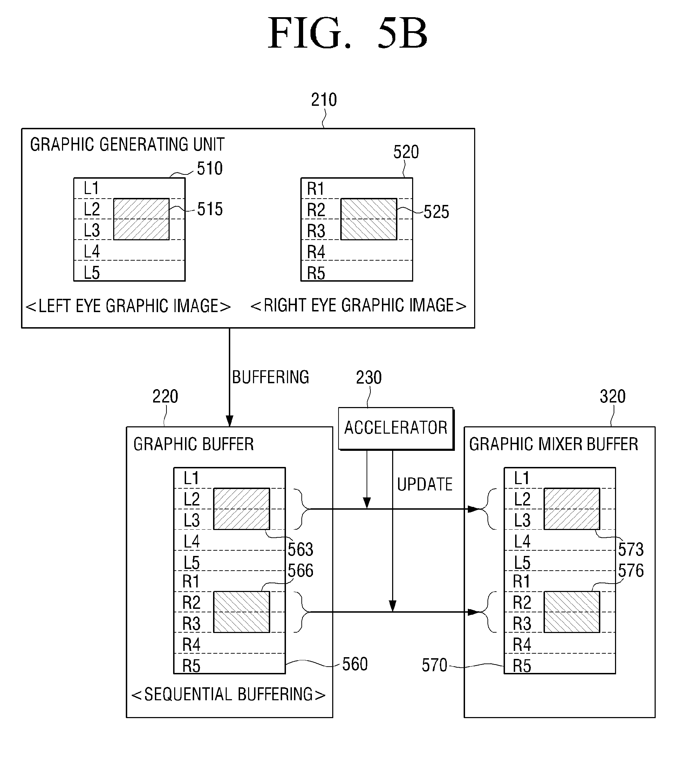

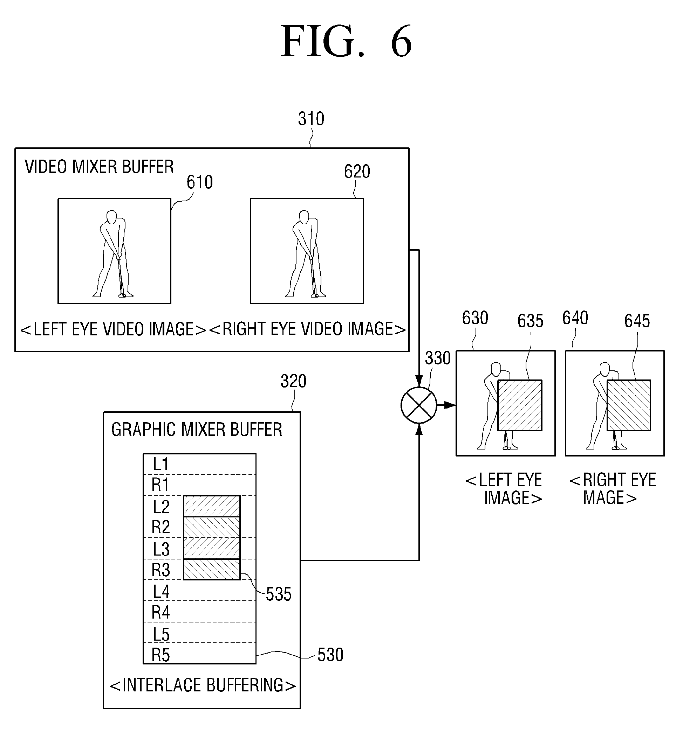

Hereinafter, a method of inserting a graphic image regarding a 3D video image to a video image will be explained with reference to FIGS. 5A, 5B, and 6. FIG. 5A is a view illustrating a process where a graphic image for a 3D image is buffered in an interlace form and updated according to an exemplary embodiment.

As illustrated in FIG. 5A, the graphic generating unit 210 generates a left eye graphic image 510 and a right eye graphic image 520. In addition, a first graphic 515 is included in the left eye graphic image 510. The first graphic 515 is included in the second pixel line (L2) and the third pixel line (L3) of the entire screen of the left eye graphic image 510.

In addition, a second graphic 525 is included in the right eye graphic image 520. The second graphic 525 is included in the second pixel line (R2) and the third pixel line (R3) of the entire screen of the right eye graphic image 520.

According to FIG. 5A, it can be seen that the left eye graphic image 510 and the right eye graphic image 520 are buffered in the graphic buffer 220 in the form of interlace. the graphic image 530 in the form of interlace is buffered inside the graphic buffer 220. In this case, it can be seen that each of the left eye graphic image 510 and the right eye graphic image 520 is buffered in the graphic image 530 line by line alternately, in the form of interlace. That is, the graphic image 530 in the form of interlace is stored in the order of L1, R1, L2, R2, L3, R3, L4, R4, L5, and R5. In addition, it can be seen that the graphic image 530 in the form of interface includes a third graphic 535 in which the first graphic 515 and the second graphic 525 are combined by each pixel line. the third graphic 535 forms one area.

If the graphic image 540 stored in the graphic mixer buffer 320 is updated with the graphic image 530 stored in the graphic buffer 220, the accelerator 230 outputs and updates only data of L2, R2, L3, and R3. As such, the accelerator 230 may output data included in a successive area through one acceleration operation. Accordingly, the accelerator 230 may update the graphic image 540 stored in the graphic mixer buffer 320 with the graphic image 530 stored in the graphic buffer 220 through one acceleration operation. It can be seen that the graphic image 540 includes a fourth graphic 545 in which the third graphic 535 is updated.

Hereinafter, a related art updating method will be explained with reference to FIG. 5B. FIG. 5B is a view illustrating a process where a graphic image for a 3D image is buffered and updated according to the prior art method.

As illustrated in FIG. 5B, according to the related art method, the left eye graphic image 510 and the right eye graphic image 520 are buffered in the graphic buffer 220 sequentially. That is, according to the prior art method, graphic images are buffered in the graphic buffer 220 in the order of L1, L2, L3, L4, L5, R1, R2, R3, R4, and R5.

Accordingly, the first graphic 515 of the left eye graphic image 510 and the second graphic 525 of the right eye graphic image 520 are disposed in a separate area when they are buffered in the graphic buffer 220. That is, as illustrated in FIG. 5B, a first graphic 563 and a second graphic 566 are included in a separate area in a graphic image 560 buffered in the graphic buffer 220.

Therefore, in order to update a graphic image 570 stored in the graphic mixer buffer 320 with the graphic image stored in the graphic buffer 220, the accelerator 230 should accelerate L2 and L3 once and then, R2 and R3 once again. As such, the accelerator 230 should perform an acceleration operation to update a first graphic 573 stored in the graphic mixer buffer 320 with the first graphic 563 stored in the graphic buffer 220 and perform another acceleration operation to update a second graphic 576 stored in the graphic mixer buffer 320 with the second graphic 566 stored in the graphic buffer 220.

As such, if the left eye graphic image 510 and the right eye graphic image 520 are buffered sequentially according to the related art method, the accelerator 230 should perform the acceleration operation twice since the accelerator 230 may output data of only one area through one acceleration.

It takes a considerable amount of time for the accelerator 230 to initiate one acceleration operation. Therefore, if the accelerator 230 performs the acceleration operation twice, a delay occurs due to the acceleration operation, resulting in a possible loss of one of a left eye graphic image and a right eye graphic image.

However, according to an exemplary embodiment, both a left eye graphic image and a right eye graphic image may be updated through one acceleration operation as illustrated in FIG. 5A. Therefore, as illustrated in FIG. 5A, if a plurality of graphic images are buffered in the form of interlace, the 3D TV 100 buffers a plurality of graphic images in a single area. Accordingly, the 3D TV 100 may output and update a plurality of graphic images through one acceleration operation.

FIG. 6 is a view illustrating a process where a video image for a 3D image is mixed with a graphic image according to an exemplary embodiment.

As illustrated in FIG. 6, a left eye video image 610 and a right eye video image 620 are buffered in the video mixer buffer 310, and the graphic image 530 buffered in the form of interlace is included in the graphic mixer buffer 320. In addition, the third graphic 535 is included in the graphic image 530.

In this case, the mixer 330 mixes a left eye graphic image and a right eye graphic image with the left eye video image 610 and the right eye video image 620 respectively.

As a result, the mixer 330 outputs a left eye image 630 to which a left eye graphic 635 is inserted and a right eye image 640 to which a right eye graphic 645 is inserted.

Through the above process, the 3D TV 100 may insert a graphic image to a left eye image and a right eye image respectively using a left eye graphic image and a right eye graphic image which are buffered in the form of interlace. In particular, the 3D TV 100 buffers a plurality of graphic images in the form of interlace in one area. Accordingly, the 3D TV 100 may output and update a plurality of graphic images through one acceleration operation.

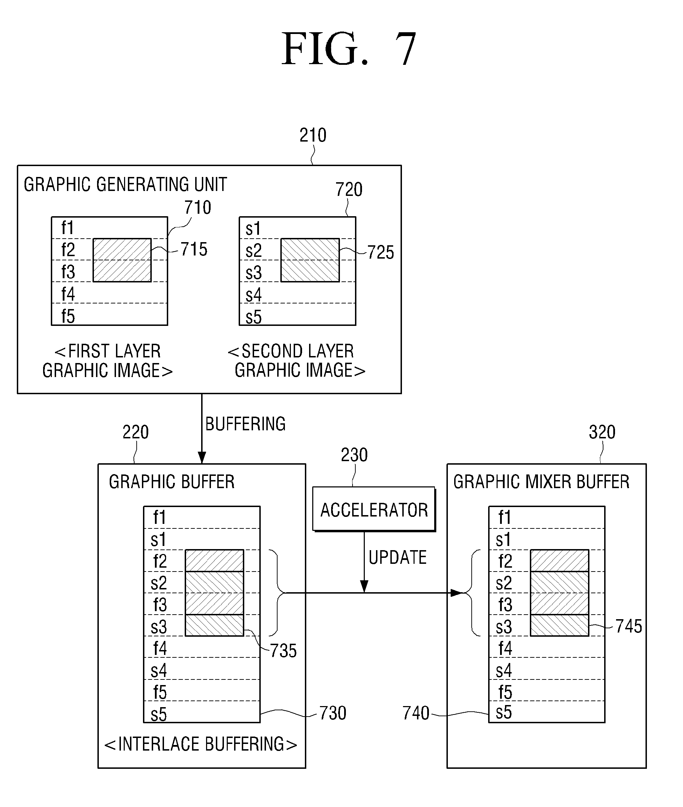

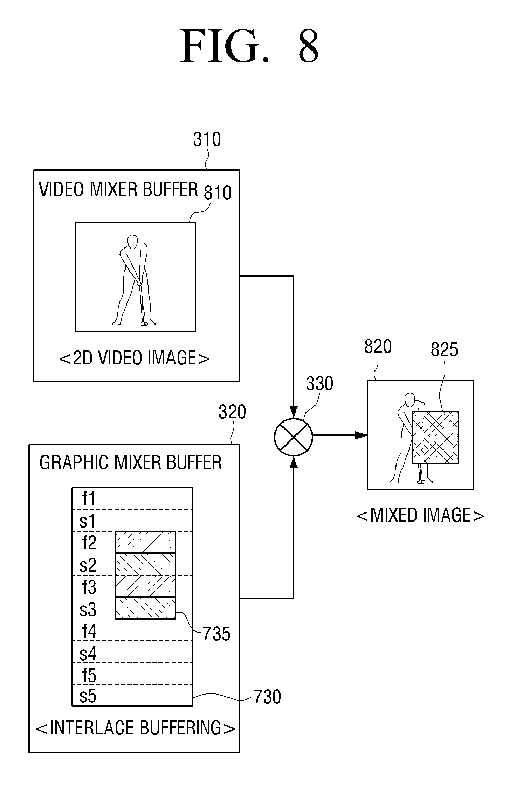

In FIGS. 5A and 6, a plurality of graphic images are 3D images including a left eye graphic image and a right eye graphic image, but this is only an example. The technical feature of the exemplary embodiments may also be applied to an OSD graphic which includes a plurality of layers, which will be explained in detail with reference to FIGS. 7 and 8. FIGS. 7 and 8 illustrate a case where an OSD graphic includes two layers.

FIG. 7 is a view illustrating a process where a multi-layered graphic image for a 2D image is buffered in an interlace form and updated according to an exemplary embodiment.

As illustrated in FIG. 7, the graphic generating unit 210 generates a first layer graphic image 710 and a second layer graphic image 720, and a first graphic 715 is included in the first layer graphic image 710. the first graphic 715 is included in the second pixel line (f2) and the third pixel line (f3) of the entire screen of the first layer graphic image 710.

In addition, a second graphic 725 is included in the second layer graphic image 720. the second graphic 725 is included in the second pixel line (s2) and the third pixel line (s3) of the entire screen of the second layer graphic image 720.

According to FIG. 7, the first layer graphic image 710 and the second layer graphic image 720 are buffered in the graphic buffer 220 in the form of interlace. That is, the graphic image 730 in the form of interlace is buffered inside the graphic buffer 220. In this case, it can be seen that each of the first layer graphic image 710 and the second layer graphic image 720 is buffered line by line alternately in the graphic image 730 in the form of interlace. That is, the graphic image 730 in the form of interlace is stored in the order of f1, s1, f2, s2, f3, s3, f4, s4, f5, and s5. In addition, it can be seen that the graphic image 730 in the form of interface includes a third graphic 735 in which the first graphic 715 and the second graphic 725 are combined by each pixel line. In this case, the third graphic 735 forms one area.

In this case, if the graphic image 740 stored in the graphic mixer buffer 320 is updated with the graphic image 730 stored in the graphic buffer 220, the accelerator 230 outputs and updates only data of f2, s2, f3, and s3. As such, the accelerator 230 may output data included in a successive area through one acceleration operation. Accordingly, the accelerator 230 may update the graphic image 740 stored in the graphic mixer buffer 320 with the graphic image 730 stored in the graphic buffer 220 through one acceleration operation, and output a fourth graphic 745.

FIG. 8 is a view illustrating a process where a video image for a 2D image is mixed with a multi-layered graphic image according to an exemplary embodiment.

As illustrated in FIG. 8, a 2D video image 810 is buffered in the video mixer buffer 310, and the graphic image 730 buffered in the form of interlace is included in the graphic mixer buffer 320. In addition, it can be seen that the third graphic 735 is included in the graphic image 730.

In this situation, the mixer 330 mixes the first layer graphic image and the second layer graphic image with the 2D video image 810.

As a result, the mixer 330 outputs a 2D image 820 to which a final graphic 825 where the first layer graphic and the second layer graphic are overlapped.

Through the above process, the 3D TV 100 may insert a graphic image to a 2D image using the first layer graphic image and the second layer graphic image which are buffered in the form of interlace. In particular, the 3D TV 100 buffers multi-layered graphic images in the form of interlace in one area. Accordingly, the 3D TV 100 may output and update multi-layered graphic images through one acceleration operation.

Meanwhile, in the exemplary embodiment, a display apparatus is a 3D TV, but this is only an example. A display apparatus may be any apparatus which is capable of mixing a graphic image with a video image and displaying the mixed image. For example, a display apparatus may be a monitor, or a notebook computer in addition to a 3D TV.

Finally, the image output unit 156 of the display apparatus of the exemplary embodiments need not be part of the display apparatus but may be a separate and independent unit.

As described above, according to various exemplary embodiments, a display apparatus which alternately buffers a plurality of graphic images line by line, in the form of interlace, and updates a graphic image to be mixed with a buffered graphic image and a method for providing a graphic image thereof are provided. Accordingly, a plurality of graphic images may be updated through one acceleration operation. As a result, the display apparatus may update a plurality of graphic images using one accelerator, thereby preventing deterioration of graphic performance due to resource conversion in CPU and a delay from occurring.

Although a few embodiments of the inventive concept have been shown and described, it would be appreciated by those skilled in the art that changes may be made in these embodiments without departing from the principles and spirit of the inventive concept, the scope of which is defined in the claims and their equivalents.

## Claims

1. A display apparatus comprising:
a video processing unit which processes a video image;
a graphic image processing unit which generates and updates a plurality of graphic images to be added to the video image and outputs a graphic image;
a mixer which mixes the video image with the graphic image to generate a mixed image; and
an image output unit which outputs the mixed image,
wherein the graphic image processing unit includes a graphic buffer which buffers the plurality of graphic images line by line alternately, in a form of interlace to generate the graphic image.

2. The display apparatus as claimed in claim 1, wherein the graphic image processing unit comprises:
an accelerator which accelerates the graphic image buffered in the graphic buffer to update the graphic image.

3. The display apparatus as claimed in claim 2, wherein the accelerator updates a plurality of graphic images corresponding to one video image frame through one acceleration operation.

4. The display apparatus as claimed in anyone of claims 1 to 3, wherein the plurality of graphic images are buffered line by line alternately, in a form of interlace so as to be buffered in one area.

5. The display apparatus as claimed in anyone of claims 1 to 4, wherein the video image is a three-dimensional video image of which one video image frame includes a left eye image frame and a right eye image frame.

6. The display apparatus as claimed in claim 5, wherein the plurality of graphic images include a left eye graphic image to be inserted to the left eye video image frame and a right eye graphic image to be inserted to the right eye video image frame,
wherein the graphic image processing unit buffers the left eye graphic image and the right eye graphic image line by line alternately, in a form of interlace, and updates the graphic image to be mixed with a buffered graphic image.

7. The display apparatus as claimed in anyone of claims 1 to 6, wherein the plurality of graphic images are on-screen display (OSD) graphic images having a plurality of layers and include graphic images as many as the plurality of layers in one video image frame,
wherein the graphic image processing unit buffers graphic images regarding the plurality of layers line by line alternately, in a form of interlace, and updates the graphic image to be mixed with a buffered graphic image.

8. A method for providing a graphic image, the method comprising:
processing an input video image;
generating and updating a plurality of graphic images to be added to the video image;
mixing the video image with the plurality of graphic images to generate a mixed image; and
displaying the mixed image,
wherein the generating and updating of the plurality of graphic images comprises buffering the plurality of graphic images line by line alternately, in a form of interlace to generate a graphic image, updating the graphic image to be mixed with a buffered graphic image, and outputting the mixed image.

9. The method as claimed in claim 8, wherein the generating and updating the plurality of graphic images comprises:
accelerating the graphic image to be mixed with the buffered graphic image and updating the buffered graphic buffer.

10. The method as claimed in claim 9, wherein the accelerating comprises updating a plurality of graphic images corresponding to one video image frame through one acceleration operation.

11. The method as claimed in anyone of claims 8 to 10, wherein the plurality of graphic images are buffered line by line alternately, in a form of interlace so as to be buffered in one area.

12. The method as claimed in anyone of claims 8 to 11, wherein the video image is a three-dimensional video image of which one video image frame comprises a left eye image frame and a right eye image frame.

13. The method as claimed in claim 12, wherein the plurality of graphic images include a left eye graphic image to be inserted to the left eye video image frame and a right eye graphic image to be inserted to the right eye video image frame,
wherein the generating and updating graphic images comprises buffering the left eye graphic image and the right eye graphic image line by line alternately, in a form of interlace, and updating the graphic image to be mixed with a buffered graphic image.

14. The method as claimed in anyone of claims 9 to 13, wherein the plurality of graphic images are on screen display (OSD) graphic images having a plurality of layers and include as many graphic images as a plurality of layers in one video image frame,
wherein the generating and updating of the graphic images comprise buffering graphic images regarding the plurality of layers line by line alternately, in a form of interlace, and updating the graphic image to be mixed with a buffered graphic image.
